# EUROPEAN PATENT SPECIFICATION

(11) **EP 3 808 097 B1**
(45) Date of publication and mention of the grant of the patent: **11.02.2026**
(21) Application number: 19840103.6
(22) Date of filing: 24.07.2019
(51) Int. Cl.: H04L 41/0806, H04L 41/0853, H04L 67/12, H04W 4/80, G06V 10/10, G06V 10/94, G06V 20/20, H04L 61/5038

(54) **METHOD AND APPARATUS FOR ESTABLISHING DEVICE CONNECTION**
VERFAHREN UND VORRICHTUNG ZUR HERSTELLUNG EINER GERÄTEVERBINDUNG
PROCÉDÉ ET APPAREIL PERMETTANT D'ÉTABLIR UNE CONNEXION DE DISPOSITIF

(30) Priority: 25.07.2018 CN 201810824343; 27.06.2019 KR 20190077307
(43) Date of publication of application: 21.04.2021
(73) Proprietor: Samsung Electronics Co., Ltd., Suwon-si, Gyeonggi-do 16677 (KR)
(72) Inventor: CHEN, Xunmin, Nanjing, jiangsu 210012 (CN); YIN, Peng, Nanjing, jiangsu 210012 (CN); HU, Jianrong, Nanjing, jiangsu 210012 (CN)
(74) Representative: Gulde & Partner
(86) International application number: PCT/KR2019/009198
(87) International publication number: WO 2020/022780

(56) References cited:
- EP-A2- 3 168 730
- WO-A1-2013/154476
- CN-A- 105 301 971
- KR-A- 20160 066 292
- KR-A- 20170 016 744
- KR-A- 20170 040 492
- US-A1- 2013 223 279
- US-A1- 2015 130 957
- US-A1- 2016 021 692
- US-A1- 2017 195 424

## Description

### [Technical Field]

The disclosure relates to the technical field of communication. Particularly, the disclosure relates to a method and apparatus for establishing a device connection.

### [Background Art]

In the age of popularization of smart devices, with the wave of internet of things (IoT), there are more and more application scenarios of interconnection between devices. Accordingly, the requirements for intellectualization of devices are getting higher, and the requirements for the convenience of application scenarios are getting higher. EP 3 168 730 A2 discloses a mobile terminal and a method for controlling the same. US 2013/223279 Al discloses sensor-based configuration and control of network devices. WO 2013/154476 Al discloses pairing the mobile terminal with a wireless device. US 20160021692A1, CN 105301971A, and KR 10-2017-0040492 A disclose the establishment of a connection between two devices by capturing an image, identifying devices in the image, identifying the devices in the image in a device list stored in a database/server and establishing a connection between the devices.

The above information is presented as background information only to assist with an understanding of the disclosure. No determination has been made, and no assertion is made, as to whether any of the above might be applicable as prior art with regard to the disclosure.

### [Disclosure of Invention]

### [Technical Problem]

In an IoT environment, there may be multiple connectable smart devices. How to quickly distinguish a target smart device and establish a connection is implemented in the existing implementations as follows.

A current user needs to open the Bluetooth or a wireless network first, search for a device list in the current IoT environment, select the target device in the list, try to establish a connection, and enter a connection password until the connection is successfully established.

Such a process to establish a connection obviously does not meet the requirements for the convenience of smart devices.

And for device without input/output (IO) accessories, such as a keyboard, a touch screen, a mouse, etc., or without a display screen, or with a small-size display screen, the connections with other devices cannot be established.

### [Solution to Problem]

The invention is set out in the appended set of claims. Aspects of the disclosure are to address at least the above-mentioned problems and/or disadvantages and to provide at least the advantages described below. Accordingly, an aspect of the disclosure is to provide an apparatus and method for establishing a device connection, which can automatically establish a connection between devices with less operation on the devices.

In order to solve the above technical problems, the technical solution of the disclosure is implemented as follows.

Additional aspects will be set forth in part in the description which follows and, in part, will be apparent from the description, or may be learned by practice of the presented embodiments.

### [Advantageous Effects of Invention]

Accordingly, an aspect of the disclosure is to provide an apparatus and method for establishing a device connection, which can automatically establish a connection between devices with less operation on the devices.

### [Brief Description of Drawings]

The above and other aspects, features and advantages of various embodiments of the disclosure will be more apparent from the following description taken in conjunction with the accompanying drawings, in which:
FIG. 1 is a flowchart of establishing a device connection according to the invention;
FIG. 2 is a diagram of a first device acquiring an image of a second device through a camera ;
FIG. 3 is a flowchart of a first device controlling a second device through an internet of things (IoT) menu according to an embodiment of the disclosure;
FIG. 4 is a diagram of initiating a request for an IoT menu by clicking according to an embodiment of the disclosure;
FIG. 5 is a diagram of displaying an IoT menu of a second device on a visual floating window on a first device according to an embodiment of the disclosure;
FIG. 6 is a diagram of selecting a mute function in an IoT menu of the second device according to an embodiment of the disclosure;
FIG. 7 is a flowchart of establishing a device connection according to the invention;
FIG. 8 is a diagram of establishing a device connection with a pair of glasses according to an embodiment of the disclosure;
FIG. 9 is a flowchart of displaying an IoT state of devices according to an embodiment of the disclosure;
FIG. 10 is a diagram of displaying an unconnected state according to an embodiment of the disclosure;
FIG. 11 is a diagram of displaying a connected state in according to an embodiment of the disclosure;
FIG. 12 is a diagram of the structure of an apparatus according to an embodiment of the disclosure; and
FIG. 13 is a block diagram of a device in a network environment according to an embodiment of the disclosure.

Throughout the drawings, like reference numerals will be understood to refer to like parts, components, and structures.

### [Mode for the Invention]

The following description with reference to the accompanying drawings is provided to assist in comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

An embodiment of the disclosure provides a method for establishing a device connection which applied to a first device with a camera. In the method, the first device captures and recognizes the device type of a second device to be connected through the camera, and acquires a device list corresponding to the type of the second device from an internet of things (IoT) server to determine the related information of the second device so as to establish a connection with the second device. Automatically establishing a connection between devices in the case that the hardware requirements of the devices are not high can be implemented in this solution.

In the embodiment of the disclosure, the devices such as the first device, the second device and the like are not specifically referred to as a type of devices, but refer to any device in the current IoT environment.

According to the invention, the first device is taken as a main body for controlling the connection establishment. The first device may be a mobile phone, an iPad^{®}, glasses or the like; and the first device needs to have camera function, that is, with a camera.

The process of establishing a device connection in the embodiment of the disclosure will be described below in detail with reference to the accompanying drawings.

### First Embodiment

In this embodiment, a process of one device establishing a connection with another device is taken as an example.

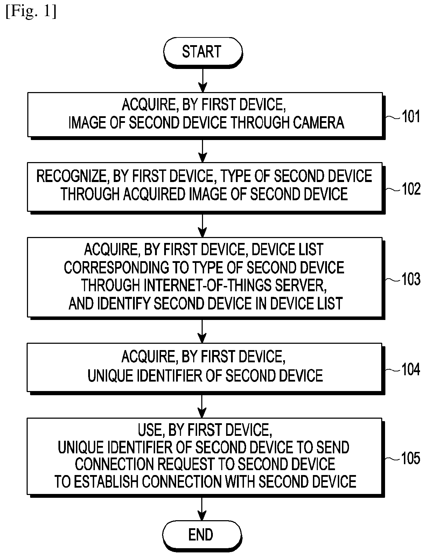

FIG. 1 is a flowchart of establishing a device connection in according to an embodiment of the disclosure.

Referring to FIG. 1, according to the invention at operation 101, a first device 200 acquires an image of a second device 210 through a camera (e.g., a camera module).

According to the invention after acquiring the image of the second device 210 through the camera, the first device 100 displays the image on a screen (e.g., a touch screen display). That is, after the first device captures the image of the second device, all the captured contents are displayed on the screen.

If the number of the displayed IoT devices is greater than 1, after an instruction input by a user to select any of the IoT devices is received, the selected IoT object is the target device to be recognized. A command for selecting any one device according to various embodiments of the disclosure may include various types of commands such as a touch (e.g., tap) gesture, a swipe gesture, a drag gesture, a hovering gesture, or a voice command.

According to various embodiments of the disclosure, when the target image is captured, multiple devices may be relatively close to each other, and the multiple devices may be captured at the same time. If the first device is moved or the user moves, there will be some inconvenience, or the second device 210 may not be accurately captured. In the disclosure, when this situation occurs, the user may manually select the target device, i.e., the second device, by touch, such that the first device 200 will know which device is to be recognized later. And if the first device 200 is a pair of glasses (e.g., Google glasses), instructions may be input through some virtual gestures or body movements.

According to the invention at operation 102, the first device 200 recognizes a type of the second device 210 through the acquired image of the second device 210.

According to the invention after operation 102 is performed, the first device 200 acquires a device list corresponding to the type of the second device 210 through the IoT server. After the device list is acquired, operation 103 is performed. And if the device list corresponding to the type of the second device 210 is not acquired through the IoT server, the IoT server is notified to establish a device list corresponding to the type of the second device 210, and add the feature information corresponding to the second device 210 in the established device list.

According to various embodiments of the disclosure, in the foregoing embodiment of the disclosure, notifying the second device 210 by the first device 200 to add the device list and the feature information may be implemented by connecting the first device 200 to the IoT server or may be implemented by notifying the IoT server to manually add the first device 200 at the IoT server. According to various embodiments of the disclosure, the implementation of adding a device list corresponding to one device type to the IoT server is not limited in the disclosure.

According to various embodiments of the disclosure, if the type of the second device 210 is recognized as a refrigerator and there is no device list corresponding to refrigerators, a device list of refrigerators is added to the IoT server. The function or operation of adding the device list of refrigerators may include, for example, assigning a unique identifier to the second device 210, and storing the brand of the device, the current state of the device (power-on, standby, contents being played, and the like), the name of the device, the model of the device, the surrounding environment of the device and the like. According to various embodiments of the disclosure, as for adding the feature information of the device, the feature information of the device may be added manually or by voice input, or may be added by recognizing the image of the second device 210 to acquire the feature information.

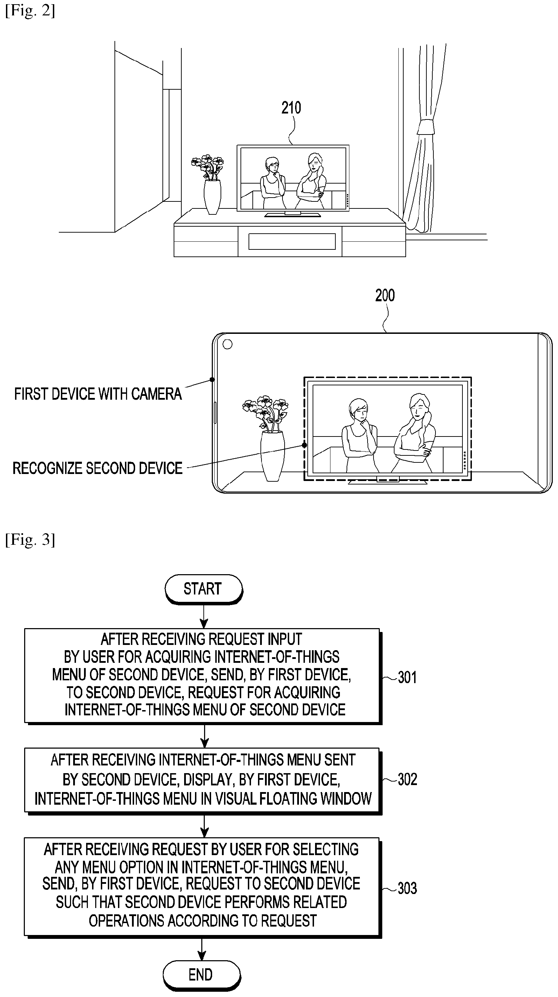

FIG. 2 is a schematic diagram of a first device acquiring an image of a second device through a camera according to an embodiment of the disclosure.

Referring to FIG. 2, the example illustrates that the first device 200 is a mobile terminal and the second device 210 is a television set. In another implementation, the first device 200 may also be a pair of glasses with a camera.

In FIG. 2, the first device 200 captures an image of the second device 210 through the camera. The device type of the second device 210 is recognized in the back-end (e.g., a server), and the second device is further identified in the corresponding device list.

Referring to FIG. 2, after the second device 210 is identified, the information about the second device is identified and displayed on the captured image in a preset mode (e.g., in a form of a dashed box on the contour boundary of the second device). According to various embodiments of the disclosure, the information may be not displayed, and the second device is directly determined in the back-end.

According to the invention at operation 103, the first device 200 acquires a device list corresponding to a type of the second device 210 through an IOT server and identifies the second device 210 in the device list.

According to various embodiments of the disclosure, there may be related information of multiple devices or related information of one device in the device list acquired in this operation. No matter how many devices have their related information presented, the feature information of the recognized device should match and identify the second device 210.

Before this operation is performed, the feature information of the second device 210 is recognized according to the acquired image of the second device 210, which may be specifically implemented by determining the feature information of the second device 210 based on preset recognition and some local pre-configuration. The method for recognizing the feature information of the second device 210 is not limited in the disclosure. The method may be implemented according to the existing implementation. And then, the second device 210 is determined in the device list corresponding to the type of the second device 210 acquired through the IoT server, which is described as below.

According to various embodiments of the disclosure, the feature information of the second device 210 is used to match with the feature information corresponding to each unique identifier in the device list. That is, the feature information corresponding to each unique identifier is matched. And if there is the feature information that matches the feature information of the second device 210, the device identified by the unique identifier corresponding to the matched feature information is determined as the second device 210.

According to various embodiments of the disclosure, for different types of devices, matching rules may be preset to determine whether the feature information matches, and the following rules may be followed but are not limited thereto.

According to various embodiments of the disclosure, each piece of feature information of any one device is separately matched separately, and a device of which the number of matched feature information reaches the preset number serves as a device which is matched with the feature information of the second device 210, and serves as the target device. And take a television set for example, the brand of the television set, the name of the television set, the signals of the television set, the power-on state of the television set, the environment surrounding the device (such as the color of the cabinet for television set, objects around the television set, etc.) are matched separately. And if the preset value is set to 3, the device with 3 or more matched feature information will serve as the target device, that is, the second device 210 to be determined.

According to various embodiments of the disclosure, if there are multiple corresponding devices with the number of matched feature information reaches the preset number of matched feature information, the device with the most matched feature information is selected as the target device; or the device of which the feature information matches certain preset feature information is determined as the target device.

According to various embodiments of the disclosure, if there is no feature information that matches the feature information of the second device 210, that is, the devices in the device list are the same type (e.g., the same refrigerator) as the second device 210 but are not the second device 210, none of the multiple refrigerators in the refrigerator list is the refrigerator indicated by the second device 210.

According to various embodiments of the disclosure, in this case, the first device 200 notifies the IoT server to assign a unique identifier to the second device 210 in the device list, and add the corresponding feature information.

According to various embodiments of the disclosure, in the specific implementation, the first device 200 may send the feature information of the second device 210 to the IoT server, and the IoT server may add the feature information of the second device 210 to the device list corresponding to the second device 210 and assign the unique identifier.

According to various embodiments of the disclosure, the IoT server may be only notified that the new device is not in the device list, and the related information may be directly (e.g., manually) added in the device list on the IoT server side.

According to various embodiments of the disclosure, at operation 104, the first device 200 acquires a unique identifier of the second device in the current IoT environment from the IOT server.

According to various embodiments of the disclosure, at operation 105, the first device 200 uses the unique identifier of the second device 210 to transmit (e.g., initiate) a connection request to the second device 210 to establish a connection with the second device 210.

According to various embodiments of the disclosure, during the establishment of a connection, the first device 200 and the second device 210 negotiate and select an IoT protocol supported by the two devices, and establish a connection by interaction. In the specific implementation of the disclosure, once one of the devices determines the related information of the target device, the process of negotiating and establishing a connection is similar to the existing implementation, which will not be described here in detail.

According to the invention a device with a camera may automatically establish a connection with the target device. Manually searching all the IoT devices in the current environment and manually selecting the target device and establishing a connection are not needed in this embodiment.

### Second Embodiment

This embodiment describes the process of controlling one device through another device after a connection has been established between the two devices.

FIG. 3 is a flowchart of a first device controlling a second device through an IoT menu according to an embodiment of the disclosure.

Referring to FIG. 3, at operation 301, after receiving a request input by a user for acquiring an IoT menu 500 of the second device 210, the first device 200 sends, to the second device 210, a request for acquiring the IoT menu of the second device 210.

According to various embodiments of the disclosure, the method for sending a request for acquiring the IoT menu 500 may be implemented by a menu request that is triggered by preconfigured related operations. For example, if the picture of the second device is touched by clicking or sliding on the screen of the first device, the first device receives the request for the IoT menu 500 input by the user.

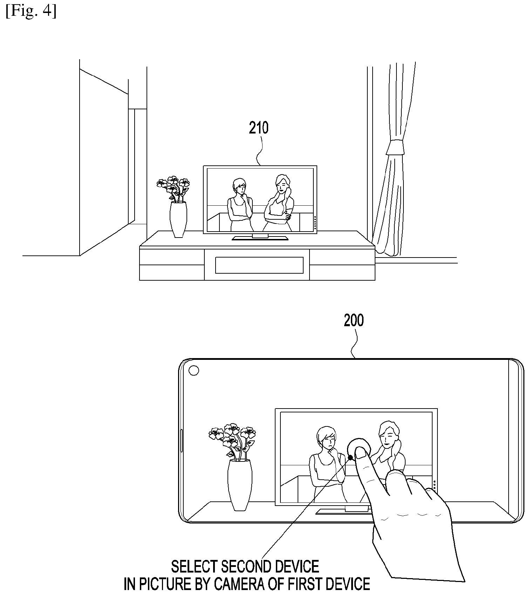

FIG. 4 is a diagram of initiating a request for an IoT menu by clicking according to an embodiment of the disclosure.

Referring to FIG. 4, to respond to a user's clicks to the image of the second device by a finger, at least one of the first device or the second device determines that a request is input by the user for acquiring an IoT menu 500 of the second device. Then a request for acquiring the IoT menu 500 of the second device is sent to the second device.

The IoT menu 500 herein may include a function menu of the second device. For example, the IoT menu 500 according to various embodiments of the disclosure may include at least one menu among a menu 501 for turning on/off power, menus 502 and 503 for controlling volume, menus 504 and 505 for switching channels, or a menu 506 for muting.

According to various embodiments of the disclosure, in the specific implementation, if the first device has a voice input function, the request may also be input by voice.

According to various embodiments of the disclosure, in response to a request for an IoT menu sent by the first device 200, the second device 210 sends the data related to the IoT menu to the first device 200.

According to various embodiments of the disclosure, at operation 302, after receiving an IoT menu sent by the second device 210, the first device 200 displays information about the IoT menu (e.g., a menu related to a volume control function, a menu related to channel switch function, a menu related to a device power on/off function, or a menu related to a muting function) in a visual floating window.

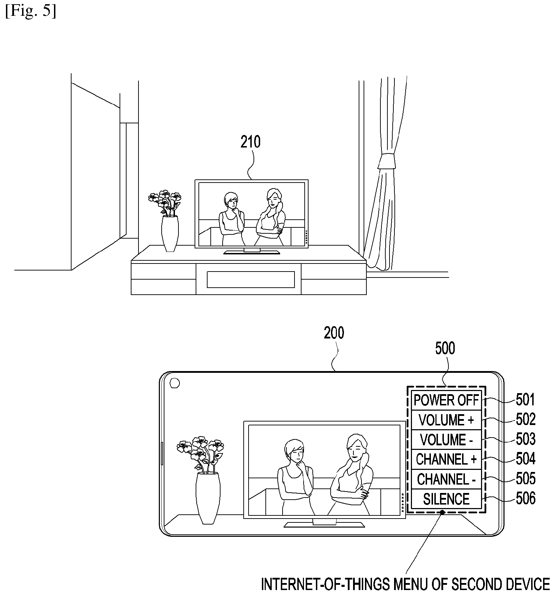

FIG. 5 is a diagram of displaying an IoT menu of a second device on a visual floating window on a first device according to an embodiment of the disclosure.

Referring to FIG. 5, according to various embodiments of the disclosure, when the IoT menu is displayed at a designated position, the contour boundary of the image of the second device 210 displayed on the first device 200 may be recognized, and the IoT menu of the second device is preferably displayed outside the contour boundary of the image of the second device, thus not affecting the viewing of the image of the second device.

According to various embodiments of the disclosure, at operation 303, after receiving a request by the user for selecting any menu option in the IoT menu, the first device sends the request to the second device such that the second device performs related operations according to the request.

According to various embodiments of the disclosure, any menu option may also be selected by voice or touch. If the first device is a pair of glasses, the touch control may be performed through virtual gestures and the like.

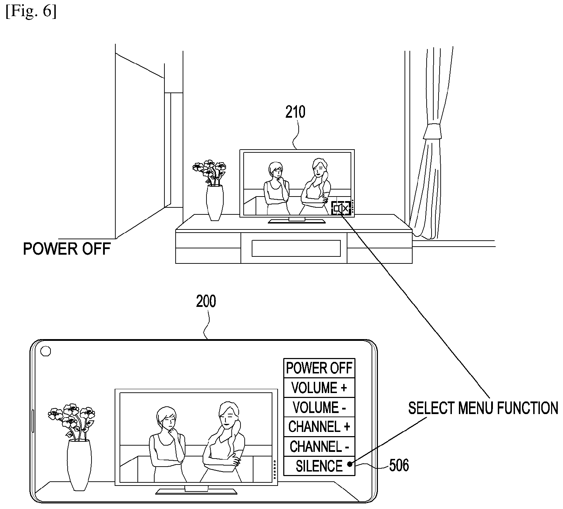

FIG. 6 is a diagram of selecting a mute menu in an IoT menu of a second device according to an embodiment of the disclosure.

Referring to FIG. 6, after receiving a request for "silence" input by a user, the first device 200 (e.g., a mobile phone) sends the request to the second device 210 (e.g., a television set), and the second device 210 mutes the television set as if it received a request for "mute" function from a remote controller.

Based on the above description, the first device 200 may control the second device 210 to perform the functional operation of the second device 210. The user may control the second device 210 in different places in a room, such as controlling a speaker to play music.

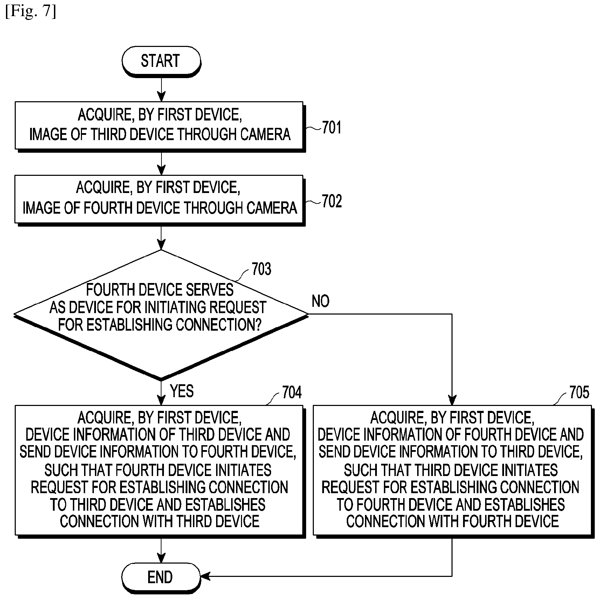

FIG. 7 is a flowchart of establishing a connection between devices according to the invention.

Referring to FIG. 7, according to the invention at operation 701, the first device (e.g., the first device 200 of FIG. 1) recognizes a type of a third device 800 through a camera. The first device 200 recognizes a type of the third device 800 through the acquired image. The first device 200 acquires a device list corresponding to the type of the third device 800 through an IoT server and identifies the third device 800 in the device list.

According to the invention at operation 702, the first device 200 captures an image of a fourth device 810 through the camera. The first device 200 recognizes a type of the fourth device 810 through the acquired image, acquires a device list corresponding to the type of the fourth device 810 through an IoT server, and identifies the fourth device 810 in the device list.

In the specific implementation of the embodiment of the disclosure, operation 701 and operation 702 are in no particular order. The specific implementation of operation 701 and operation 702 may refer to the specific implementation of operations 101 to 103.

In this embodiment, the first device 200 in this example is a pair of glasses.

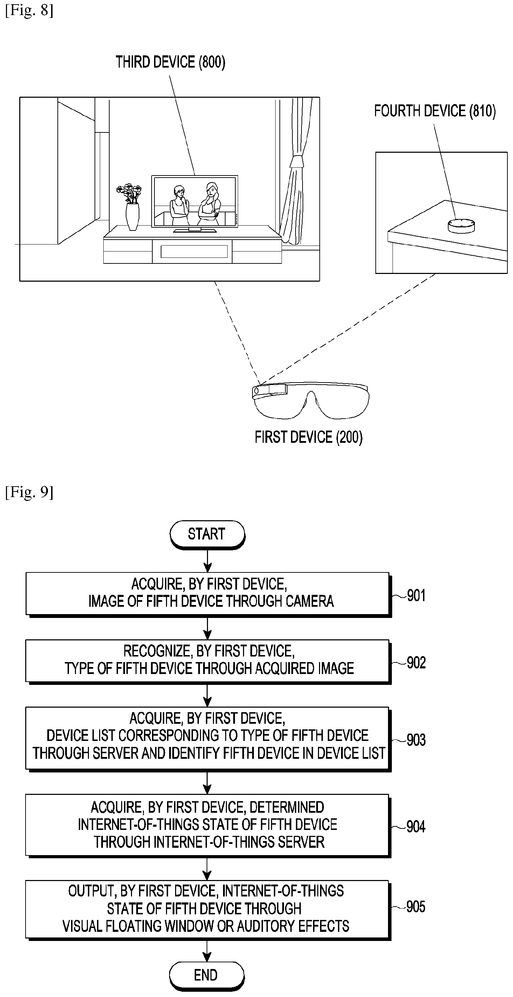

FIG. 8 is a diagram of establishing a connection between devices with a pair of glasses according to an embodiment of the disclosure.

Referring to FIG. 8, the process of acquiring an image with glasses is similar to the implementation of a mobile terminal, except that the image or menu is displayed through a virtual screen. The input of instructions may be implemented through virtual gestures or voice.

Referring to FIG. 8, according to various embodiments of the disclosure, in this embodiment, the process of identifying the third device 800 and the fourth device 810 in the device list in this embodiment is similar to the process of identifying the second device 210 in the first embodiment.

According to the invention at operation 703, the first device 200 determines whether the fourth device 810 serves as device for initiating a request for establishing connection. If the fourth device 810 is determined to serve as device for initiating the request for establishing connection, operation 704 is performed. Otherwise, operation 705 is performed.

According to the invention at operation 704, the first device 200 acquires the device information of the third device 800 and sends the device information to the fourth device 810. Using the device information, the fourth device 810 initiates a connection request for establishing a connection to the third device 800 and establishes a connection with the third device 800.

According to the invention at operation 705, the first device 200 acquires the device information of the fourth device 810 and sends the device information to the third device 800. Using the device information, the third device 800 initiates a connection request for establishing a connection to the fourth device 810 and establishes a connection with the fourth device 810.

According the invention the device information of the third device 800 or the fourth device 810, which are acquired by the first device 200, is the unique identifier of the third device 800 or the fourth device 810 in the current IoT environment, such that the device that initiates the establishment of connection may initiate a request to the peer device.

According to various embodiments of the disclosure, the third device 800 or the fourth device 810 acquires the related information of the peer device. The process of connection is similar to the existing implementation. In this embodiment, the user is not required to manually select the target device in the list and is very convenient to establish a connection between devices without a display or with a display that is too small.

### Fourth Embodiment

The fourth embodiment provides a process of viewing the state of the IoT device.

FIG. 9 is a flowchart of displaying an IoT state of devices according to an embodiment of the disclosure.

Referring to FIG. 9, according to various embodiments of the disclosure, at operation 901, the first device 200 captures an image of a fifth device through the camera.

According to various embodiments of the disclosure, at operation 902, the first device 200 recognizes a type of the fifth device through the acquired image.

According to various embodiments of the disclosure, at operation 903, the first device 200 acquires a device list corresponding to the type of the fifth device through the IoT server and identifies the fifth device in the device list.

According to various embodiments of the disclosure, the implementation process of operations 901 to 903 is similar to the implementation process of operations 101 to 103, which will not be described here in detail.

According to various embodiments of the disclosure, at operation 904, the first device 200 acquires an IoT state of the identified fifth device through the IoT server.

After each device is connected to another device, the other device is recorded in the IoT server. And the other device may be recorded in a device list or may be separately stored. At operation 905, the first device 200 outputs the IoT state of the fifth device through a visual floating window or auditory effects.

According to various embodiments of the disclosure, the IoT states of the device include connected and unconnected states. In this operation, when the IoT state of the fifth device is displayed through the visual floating window, the unconnected state may not be identified, or may be identified by a text, or may also be identified by a certain predetermined shape, such as a rectangular frame, a circle or the like.

According to various embodiments of the disclosure, when the unconnected state is displayed, it may be displayed without limitation, or may be displayed in such a manner as not to block the position of the image of the fifth device. For example, the unconnected state is displayed at a position other than the image of the fifth device.

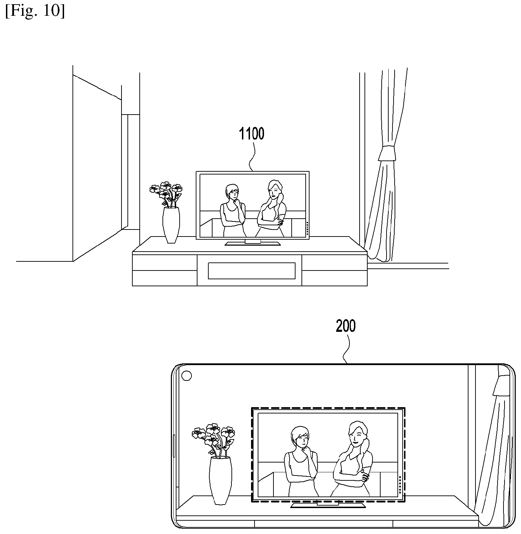

FIG. 10 is a diagram of displaying an unconnected state according to an embodiment of the disclosure.

Referring to FIG. 10, for the IoT state of the fifth device, an unconnected state is identified with a dashed box displayed outside the contour boundary, but various embodiments of the disclosure are not limited thereto.

According to various embodiments of the disclosure, a connected state may be identified by text or may be identified by a certain predetermined shape, and only needs to be distinguished from the unconnected state.

According to various embodiments of the disclosure, when the connected state is displayed, it may be displayed without limited, or may be limited to be displayed at a position outside the image of the fifth device, in such a manner as not to block the fifth device.

According to various embodiments of the disclosure, for the connected state, a list of the devices connected to the fifth device is also acquired through the IoT server, and displayed in the form of a floating menu at a position other than the position of the image of the fifth device. The connected device may be displayed by name when displayed, or the unique identifier of the device may be displayed, for the purpose that the user may sure the connected devices.

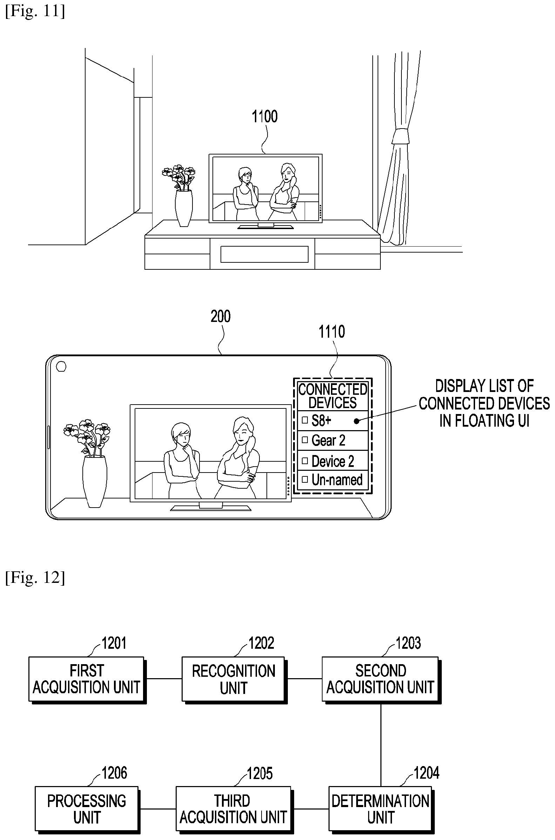

FIG. 11 is a diagram of displaying a connected state according to an embodiment of the disclosure.

Referring to FIG. 11, for the IoT state of the fifth device 1100, a connected state is identified with a solid box displayed outside the contour boundary, but various embodiments of the disclosure are not limited thereto. In particular, the device list 1110 of the connected devices, specifically including Samsung^{®} Galaxy^{™} S8+, Samsung^{®} Gear2, Device2 and unnamed, is displayed outside the image of the fifth device. Herein, "connected devices" mean devices that are currently in a connected state or have ever been connected.

Referring to FIG. 11, in the embodiment of the disclosure, the first device 200 with a camera captures and recognizes other smart devices (the second device 210, the third device 800, the fourth device 810, and the fifth device 1100) in the current IoT environment through the camera, such that the first device 200 may quickly establish a connection with the devices (the second device 210, the third device 800, the fourth device 810, and the fifth device 1100); or quickly establish a connection between the devices (the second device 210, the third device 800, the fourth device 810, and the fifth device 1100). And, the state of the devices (the second device 210, the third device 800, the fourth device 810, and the fifth device 1100) and an operation menu are displayed on the picture captured through the camera of the first device in augmented reality.

According to various embodiments of the disclosure, the operation intervention by a user during the interconnection of devices is minimized in the disclosure. The intention of the user is intelligently recognized and automatically executed (the establishment of a connection), and a user interface (UI) operation interface of augmented reality and the identification information of devices are provided.

The disclosure further proposes an apparatus for establishing device connection, which is implemented by the first device 200 with a camera.

FIG. 12 is a diagram of an apparatus according to an embodiment of the disclosure.

Referring to FIG. 12, the apparatus includes a first acquisition unit 1201, a recognition unit 1202, a second acquisition unit 1203, a determination unit 1204, a third acquisition unit 1205 and a processing unit 1206. At least one operation performed by the units 1201 through 1206 according to various embodiments of the disclosure may be performed by at least one processor 1320.

Referring to FIG. 12, according to various embodiments of the disclosure, the first acquisition unit 1201 is configured to acquire an image of a second device through the camera.

According to various embodiments of the disclosure, the recognition unit 1202 is configured to recognize the type of the second device through the image of the second device acquired by the first acquisition unit 1201.

According to various embodiments of the disclosure, the second acquisition unit 1203 is configured to acquire, through an IoT server, a device list corresponding to the type of the second device recognized by the recognition unit 1202.

According to various embodiments of the disclosure, the determination unit 1204 is configured to identify the second device in the device list acquired by the second acquisition unit 1203.

According to various embodiments of the disclosure, the third acquisition unit 1205 is configured to acquire a unique identifier of the second device in the current IoT environment determined by the determination unit 1204.

According to various embodiments of the disclosure, the processing unit 1206 is configured to use the unique identifier of the second device acquired by the third acquisition unit 1205 to initiate a connection request to the second device to establish a connection with the second device.

According to various embodiments of the disclosure, the processing unit 1206 is further configured to, if the second acquisition unit 1203 does not acquire the device list corresponding to the type of the second device through the IoT server, notify the IoT server to establish a device list corresponding to the type of the second device, and add the feature information corresponding to the second device.

According to various embodiments of the disclosure, the determination unit 1204 is specifically configured to, after the second device is determined in the device list, recognize the feature information of the second device according to the acquired image of the second device, and use the feature information of the second device to match with the feature information corresponding to each unique identifier in the device list; and if there is the feature information that matches with the feature information of the second device, determine the device identified by the unique identifier corresponding to the matched feature information as the second device.

According to various embodiments of the disclosure, the processing unit 1206 is further configured to, if the determination unit 1204 determines that there is no feature information that matches with the feature information of the second device, notify the IoT server to assign a unique identifier to the device in the device list, and add the corresponding feature information.

According to various embodiments of the disclosure, the first acquisition unit 1201 is further configured to, after the image of the second device is acquired through the camera, display the image on a screen; and the processing unit 1206 is further configured to, if the number of the displayed IoT devices displayed by the first acquisition unit 1201 is greater than 1, after an instruction input by a user to select any of the IoT devices is received, recognize the selected IoT object as the target device to be recognized.

According to various embodiments of the disclosure, the first acquisition unit 1201 is further configured to acquire an image of a third device through the camera; and acquire an image of a fourth device through the camera; the recognition unit 1202 is further configured to recognize the type of the third device through the image acquired by the first acquisition unit 1201; and recognize the type of the fourth device through the acquired image; and the second acquisition unit 1203 is further configured to acquire a device list corresponding to the type of the third device through the IoT server; and acquire a device list corresponding to the type of the fourth device through the IoT device; the determination unit 1204 is further configured to determine the third device in the device list corresponding to the type of the third device acquired by second acquisition unit 1203; determine the fourth device in the acquired device list corresponding to the type of the fourth device; and determine whether the fourth device serves as a device that initiates a request for establishing a connection; and the processing unit 1206 is further configured to, if the determination unit 1204 determines that the fourth device serves as a device that initiates a request for establishing a connection, acquire the device information of the third device and send the device information to the fourth device, such that the fourth device initiates a request for establishing a connection to the third device and establishes a connection with the third device.

According to various embodiments of the disclosure, the processing unit 1206 is further configured to, after receiving a request input by the user to acquire an IoT menu of the second device, send a request for acquiring an IoT menu of the second device to the second device; after receiving an IoT menu sent by the second device, display the IoT menu in a visual floating window; and after receiving a request by the user for selecting any menu option in the IoT menu, send the request to the second device such that the second device performs related operations according to the request.

According to various embodiments of the disclosure, the first acquisition unit 1201 is configured to acquire an image of a fifth device through the camera; the recognition unit 1202 is configured to recognize the type of the fifth device through the image of the fifth device acquired by the first acquisition unit 1201; the second acquisition unit 1203 is configured to acquire, through an IoT server, a device list corresponding to the type of the fifth device recognized by the recognition unit 1202; the determination unit 1204 is configured to identify the fifth device in the device list acquired by the second acquisition unit 1203; the third acquisition unit is configured to, through the IoT server, acquire the IoT state of the fifth device determined by the determination unit 1204; and the processing unit 1206 is further configured to display, through a visual floating window, the IoT state of the fifth device acquired by the third acquisition unit 1205.

According to various embodiments of the disclosure, the processing unit 1206 is further configured to, when the IoT state of the fifth device is displayed through the visual floating window, display the IoT state in such a way as not to block the position of the image of the fifth device.

According to various embodiments of the disclosure, the third acquisition unit 1205 is further configured to, if the IoT state of the fifth device determined by the determination unit 1204 is a connected state, acquire a list of the devices connected to the fifth device through the IoT server, and trigger the processing unit 1206 to display the list in the form of a floating menu at a position other than the position of the image of the fifth device.

According to various embodiments of the disclosure, the above units in the embodiment may be integrated into one or may be deployed separately; or may be combined into one unit, or may be further split into multiple sub-units.

According to various embodiments of the disclosure, in the disclosure, a first device with a camera captures and recognizes other smart devices (a second device, a third device, a fourth device, a fifth device, ...) in the current IoT environment through the camera, such that the first device may quickly establish a connection with the devices (the second device, the third device, the fourth device, the fifth device, ...); or quickly establish a connection between the devices (the second device, the third device, the fourth device, the fifth device, ...). Also, the state of the devices (the second device, the third device, the fourth device, the fifth device ...) and an operation menu are displayed on the picture captured through the camera of the first device in augmented reality.

The disclosure that minimizes the operation intervention by a user during the interconnection of devices is implemented in the disclosure. The intention of the user is intelligently recognized and automatically executed (the establishment of a connection) in the disclosure. A UI operation interface of augmented reality and the identification information of devices are provided in the disclosure.

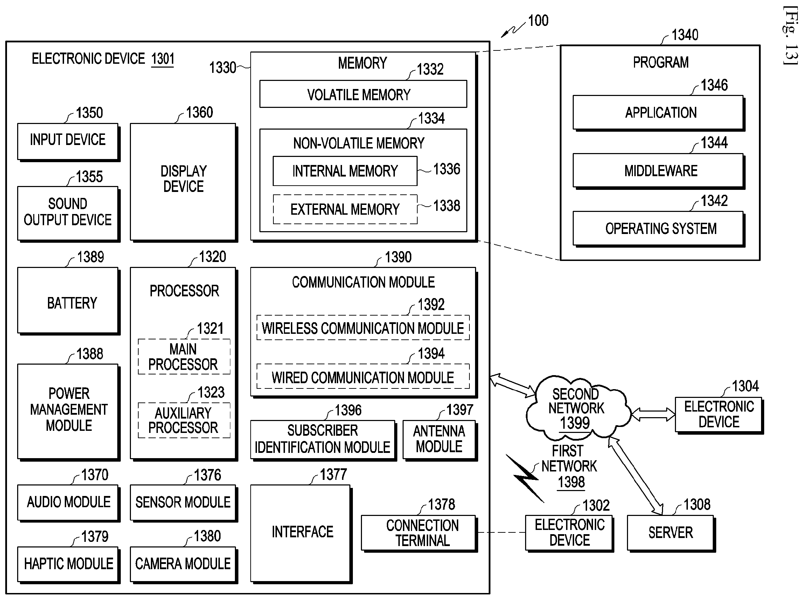

FIG. 13 is a block diagram illustrating a device 1301 in a network environment 1300 according to various embodiments.

Referring to FIG. 13, the device 1301 (e.g., first through fifth devices) in the network environment 1300 may communicate with a device 1302 via a first network 1398 (e.g., a short-range wireless communication network), or a device 1304 or a server 1308 via a second network 1399 (e.g., a long-range wireless communication network). According to an embodiment, the device 1301 may communicate with the device 1304 via the server 1308. According to an embodiment, the device 1301 may include a processor 1320, memory 1330, an input device 1350, a sound output device 1355, a display device 1360, an audio module 1370, a sensor module 1376, an interface 1377, a haptic module 1379, a camera module 1380, a power management module 1388, a battery 1389, a communication module 1390, a subscriber identification module (SIM) 1396, or an antenna module 1397. In some embodiments, at least one (e.g., the display device 1360 or the camera module 1380) of the components may be omitted from the device 1301, or other components may be added in the device 1301. In some embodiments, some of the components may be implemented as single integrated circuitry. For example, the sensor module 1376 (e.g., a fingerprint sensor, an iris sensor, or an illuminance sensor) may be implemented as embedded in the display device 1360 (e.g., a display).

The processor 1320 may execute, for example, software (e.g., a program 1340) to control at least one other component (e.g., a hardware or software component) of the device 1301 coupled with the processor 1320, and may perform various data processing or computation. According to one embodiment, as at least part of the data processing or computation, the processor 1320 may load a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), and an auxiliary processor 1323 (e.g., a graphics processing unit (GPU), an image signal processor (ISP), a sensor hub processor, or a communication processor (CP)) that is operable independently from, or in conjunction with, the main processor 1321. Additionally or alternatively, the auxiliary processor 1323 may be adapted to consume less power than the main processor 1321, or to be specific to a specified function. The auxiliary processor 1323 may be implemented as separate from, or as part of the main processor 1321. At least one operation or function according to various embodiments of the disclosure may be performed by the processor 1320.

The auxiliary processor 1323 may control at least some of functions or states related to at least one (e.g., the display device 1360, the sensor module 1376, or the communication module 1390) of the components of the device 1301, instead of the main processor 1321 while the main processor 1321 is in an inactive (e.g., sleep) state or along with the main processor 1321 while the main processor 1321 is an active state (e.g., performing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323.

The memory 1330 may store various data used by at least one component (e.g., the processor 1320 or the sensor module 1376) of the device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input device 1350 may receive a command or data to be used by other component (e.g., the processor 1320) of the device 1301, from the outside (e.g., a user) of the device 1301. The input device 1350 may include, for example, a microphone, a mouse, a keyboard, or a pen input device (e.g., a stylus pen).

The sound output device 1355 may output sound signals to the outside of the device 1301. The sound output device 1355 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 1360 may visually provide information to the outside (e.g., a user) of the device 1301. The display device 1360 may include, for example, a display, a hologram device, or a projector and control circuitry to control a corresponding one of the display, hologram device, and projector. According to an embodiment, the display device 1360 may include touch circuitry adapted to detect a touch, or sensor circuitry (e.g., a pressure sensor) adapted to measure the intensity of force incurred by the touch.

The audio module 1370 may convert a sound into an electrical signal and vice versa. According to an embodiment, the audio module 1370 may obtain the sound via the input device 1350, or output the sound via the sound output device 1355 or a headphone of an external electronic device (e.g., the device 1302) directly or wirelessly coupled with the device 1301.

The sensor module 1376 may detect an operational state (e.g., power or temperature) of the device 1301 or an environmental state (e.g., a state of a user) external to the device 101, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the device 1301 to be coupled with the external electronic device (e.g., the device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connection terminal 1378 may include a connector via which the electronic device 1301 may be physically connected with the external electronic device (e.g., the device 1302). According to an embodiment, the connection terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or motion) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the device 1301. According to one embodiment, the power management module 1388 may be implemented as at least part of, for example, a power management integrated circuit (PMIC).

The battery 1389 may supply power to at least one component of the device 1301. According to an embodiment, the battery 1389 may include, for example, a primary cell which is not rechargeable, a secondary cell which is rechargeable, or a fuel cell.

The communication module 1390 may support establishing a wired or wireless communication channel between the electronic device 1301 and an external electronic device (e.g., the device 1302, the device 1304, or the server 1308) and performing communication through the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a cellular network, the Internet, or a computer network (e.g., LAN or wide area network (WAN)) These various types of communication modules may be implemented as a single component (e.g., a single chip), or may be implemented as multi components (e.g., multi chips) separate from each other. The wireless communication module 1392 may identify and authenticate the device 1301 in a communication network, such as the first network 1398 or the second network 1399, using subscriber information (e.g., international mobile subscriber identity (IMSI)) stored in the SIM 1396.

The antenna module 1397 may transmit or receive a signal or power to or from the outside (e.g., the external device). According to an embodiment, the antenna module 1397 may include one or more antennas including a radiating element composed of a conductive material or a conductive pattern formed in or on a substrate (e.g., PCB). According to an embodiment, the antenna module 1397 may include a plurality of antennas. In such a case, at least one antenna appropriate for a communication scheme used in the communication network, such as the first network 1398 or the second network 1399, may be selected, for example, by the communication module 1390 from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to various embodiments of the disclosure, commands or data may be transmitted or received between the device 1301 and the external device 1304 via the server 1308 coupled with the second network 1399. Each of the device 1302 and the device 1304 may be a device of the same type as or a different type than the device 1301. According to an embodiment, all or some of operations to be executed at the device 1301 may be executed at one or more of the external devices 1302, 1304, or 1308. For example, if the device 1301 should perform a function or a service automatically, or in response to a request from a user or another device, the device 1301, instead of, or in addition to, executing the function or the service, may request the one or more external electronic devices to perform at least part of the function or the service. The one or more external devices receiving the request may perform the at least part of the function or the service requested, or an additional function or an additional service related to the request, and transfer an outcome of the performing to the device 1301. The device 1301 may provide the outcome, with or without further processing of the outcome, as at least part of a reply to the request. To that end, a cloud computing, distributed computing, or client-server computing technology may be used, for example.

The device according to various embodiments of the disclosure may be one of various types of devices. The devices may include, for example, a portable communication device (e.g., a smartphone), a computer device, a portable multimedia device, a portable medical device, a camera, a wearable device, or a home appliance. According to an embodiment of the disclosure, the devices are not limited to those described above.

It should be appreciated that various embodiments of the disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" or "unit" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As is apparent from the foregoing description, according to various embodiments of the disclosure, the disclosure provides a method and apparatus for establishing a device connection, which can automatically establish a connection between devices with less operation on the devices.

Effects according to various embodiments are not limited to the described effects, and it would be obvious to those of ordinary skill in the art that various effects are included in the disclosure.

While the disclosure has been shown and described with reference to various embodiments thereof, it will be understood by those skilled in the art that various changes in form and details may be made therein without departing from the scope of the disclosure as defined by the appended claims.

## Claims

1. A method for establishing a device connection by a first device (100, 200), the method comprising:
acquiring (101) a first image of a second device (210) using a camera of the first device (100, 200);
recognizing (102) a first type of the second device (210) and first feature information associated with the second device based on the first image;
transmitting (103) a first request for a first device list based on the first type of the second device (210) to an internet of things, IoT, server;
in case that the first device list is stored by the IoT server, receiving (103) the first device list from the IoT server;
identifying (104) a first unique identifier of the second device (210) in the first device list based on the first feature information associated with the second device (210);
transmitting (105) a second request to establish a connection with the second device (210) based on the first unique identifier of the second device (210);
acquiring (701) a second image of a third device (800) using the camera;
recognizing a second type of the third device (800) and second feature information associated with the third device (800) based on the second image;
receiving a second device list based on the second type of the third device (800) from the IoT server;
identifying a second unique identifier of the third device (800) in the second device list based on the second feature information associated with the third device (800); and
determining (703) whether the third device serves as device for initiating a request for establishing a connection with the second device,
in case that the third device is determined to serve as device for initiating the request for establishing the connection, transmitting (704) device information of the second device to the third device for establishing a connection with the second device, wherein the device information of the second device includes the first unique identifier of the second device, and
in case that the third device is not determined to serve as device for initiating the request for establishing the connection, transmitting (705) device information of the third device to the second device for establishing a connection with the third device, wherein the second device information of the third device includes the second unique identifier of the third device.

2. The method of claim 1, further comprising:
in case that the first device list is not stored by the IoT server, transmitting a third request for setting the first device list to the IoT server, wherein the third request includes the first type of the second device and the first feature information associated with the second device.

3. The method of claim 1,
wherein the identifying of the first unique identifier of the second device comprises:
determining whether the first feature information associated with the second device is matched with a first item in the first device list; and
determining a unique identifier of the first item as the first unique identifier of the second device in case that the first feature information associated with the second device is matched with the first item in the first device list.

4. The method of claim 3, further comprising:
in case that no item in the first device list matches the first feature information of the second device, notifying the IoT server to assign a unique identifier to the second device in the device list, and add the first feature information in the device list.

5. The method of claim 1, further comprising:
displaying the first image on a screen of the first device;
determining a number of IoT devices in the first image; and
receiving a first input selecting the second device from among the number of the IoT devices.

6. The method of claim 1, further comprising:
receiving (301) a second input for acquiring a menu of commands for the second device;
in response to the second input, transmitting (301) a fourth request to the second device for the menu of commands;
receiving and displaying (302) the menu of commands in a floating window; and
in case that a third input of a command on the menu is received, transmitting (303) a fifth request to the second device to perform the command.

7. The method of claim 1, further comprising:
acquiring (901) a fourth image of a fifth device using the camera;
displaying the fourth image, wherein the fifth device is displayed in a first region;
recognizing (902) a fourth type of the fifth device and fourth feature information associated with the fifth device based on the fourth image;
receiving (903) a fourth device list based on the fourth type of the fifth device from the IoT server;
identifying a fourth unique identifier of the fifth device in the fourth device list based on the fourth feature information associated with the fifth device;
receiving (904) information including an IoT state of the fifth device from the IoT server; and
displaying (905) the IoT state of the fifth device through a floating window, wherein the floating window is displayed in a second region that is different from the first region,
wherein the method is further comprising in case that the IoT state corresponds to a connected state, requesting a list of devices connected to the fifth device from the IoT server, and displaying a floating menu including the list of devices in a second region that is different from the first region.

8. A device comprising:
at least one camera;
a touch screen display; and
at least one processor,
wherein the at least one processor is configured to:
acquire a first image of a second device using the at least one camera,
recognize a first type of the second device and first feature information associated with the second device based on the first image,
transmit a first request for a first device list based on the first type of the second device to an internet of things, IoT, server;
in case that the first device list is stored by the IoT server, receive the first device list from the IoT server;
identify a first unique identifier of the second device in the first device list based on the first feature information associated with the second device, and
transmit a second request to establish a connection with the second device based on the first unique identifier of the second device,
acquire (701) a second image of a third device (800) using the camera,
recognize a second type of the third device (800) and second feature information associated with the third device (800) based on the second image,
receive a second device list based on the second type of the third device (800) from the IoT server,
identify a second unique identifier of the third device (800) in the second device list based on the second feature information associated with the third device (800), and
determine (703) whether the third device serves as device for initiating a request for establishing a connection with the second device,
in case that the third device is determined to serve as device for initiating the request for establishing the connection, transmit (704) device information of the second device to the third device for establishing a connection with the second device, wherein the device information of the second device includes the first unique identifier of the second device, and
in case that the third device is not determined to serve as device for initiating the request for establishing the connection, transmit (705) device information of the third device to the second device for establishing a connection with the third device, wherein the second device information of the third device includes the second unique identifier of the third device.

9. The device of claim 8,
wherein the at least one processor is further configured to:
in case that the first device list is not stored by the IoT server, transmit a third request for setting the first device list to the IoT server, wherein the third request includes the first type of the second device and the first feature information associated with the second device.

10. The device of claim 8,
wherein the at least one processor is further configured to:
determine whether the first feature information associated with the second device is matched with a first item in the first device list, and
determine a unique identifier of the first item as the first unique identifier of the second device in case that the first feature information associated with the second device is matched with the first item in the first device list,
wherein the at least one processor is further configured to, in case that no item in the first device list matches with the first feature information of the second device, notify the IoT server to assign a unique identifier to the second device in the device list, and add the first feature information in the device list.

11. The device of claim 8, wherein the at least one processor is further configured to:
display the first image on the touch screen display,
determine a number of IoT devices in the first image, and
receive a first input selecting the second device from among the number of the first IoT devices.

12. The device of claim 8, wherein the at least one processor is further configured to:
receive a second input for acquiring a menu of commands for the second device,
in response to the second input, transmit a fourth request to the second device for the menu of commands,
receiving and displaying the menu of commands in a floating window, and
in case that a third input of a command on the menu is received, transmit a fifth request to the second device to perform the command.

13. The device of claim 8, wherein the at least one processor is further configured to:
acquire a fourth second image of a fifth device using the at least one camera,
displaying the fourth image, wherein the fifth device is displayed in a first region,
recognize a fourth type of the fifth device and fourth feature information associated with the fifth device based on the fourth image,
receive a fourth device list based on the fourth type of the fifth device from the IoT server,
identify a fourth unique identifier of the fifth device in the fourth device list based on the fourth feature information associated with the fifth device,
receive information including an IoT state of the fifth device from the IoT server, and
display the IoT state of the fifth device through a floating window, wherein the floating window is displayed in a second region that is different from the first region,
wherein the at least one processor is further configured to in case that the IoT state corresponds to a connected state, request a list of devices connected to the fifth device from the IoT server, and display a floating menu including the list of devices in a second region that is different from the first region.

## Patentansprüche

1. Verfahren zum Herstellen einer Vorrichtungsverbindung durch eine erste Vorrichtung (100, 200), wobei das Verfahren umfasst:
Erfassen (101) eines ersten Bildes einer zweiten Vorrichtung (210) unter Verwendung einer Kamera der ersten Vorrichtung (100, 200);
Erkennen (102) eines ersten Typs der zweiten Vorrichtung (210) und erster, der zweiten Vorrichtung zugeordneter Merkmalsinformationen basierend auf dem ersten Bild;
Übertragen (103) einer ersten Anforderung für eine erste Vorrichtungsliste basierend auf dem ersten Typ der zweiten Vorrichtung (210) an einen Internet der Dinge-, IoT-,Server;
für den Fall, dass die erste Vorrichtungsliste vom IoT-Server gespeichert wird, Empfangen (103) der ersten Vorrichtungsliste vom IoT-Server;
Identifizieren (104) einer ersten eindeutigen Kennung der zweiten Vorrichtung (210) in der ersten Vorrichtungsliste basierend auf der ersten Merkmalsinformation, die der zweiten Vorrichtung (210) zugeordnet ist;
Übertragen (105) einer zweiten Anforderung zum Herstellen einer Verbindung mit der zweiten Vorrichtung (210) basierend auf der ersten eindeutigen Kennung der zweiten Vorrichtung (210);
Erfassen (701) eines zweiten Bildes einer dritten Vorrichtung (800) mit Hilfe der Kamera;
Erkennen eines zweiten Typs der dritten Vorrichtung (800) und einer zweiten Merkmalsinformation, die der dritten Vorrichtung (800) zugeordnet ist, basierend auf dem zweiten Bild;
Empfangen einer zweiten Vorrichtungsliste basierend auf dem zweiten Typ der dritten Vorrichtung (800) von dem IoT-Server;
Identifizieren einer zweiten eindeutigen Kennung der dritten Vorrichtung (800) in der zweiten Vorrichtungsliste basierend auf der zweiten Merkmalsinformation, die der dritten Vorrichtung (800) zugeordnet ist; und
Bestimmen (703), ob die dritte Vorrichtung als Vorrichtung zum Initiieren einer Anforderung zum Aufbau einer Verbindung mit der zweiten Vorrichtung dient,
für den Fall, dass bestimmt wird, dass die dritte Vorrichtung als Vorrichtung zum Initiieren der Anforderung zum Herstellen der Verbindung dient, Übertragen (704) von Vorrichtungsinformationen der zweiten Vorrichtung an die dritte Vorrichtung zum Herstellen einer Verbindung mit der zweiten Vorrichtung, wobei die Vorrichtungsinformationen der zweiten Vorrichtung die erste eindeutige Kennung der zweiten Vorrichtung umfassen, und
für den Fall, dass bestimmt wird, dass die dritte Vorrichtung nicht als Vorrichtung zum Initiieren der Anforderung zum Herstellen der Verbindung dient, Übertragen (705) von Vorrichtungsinformationen der dritten Vorrichtung an die zweite Vorrichtung zum Herstellen einer Verbindung mit der dritten Vorrichtung, wobei die zweiten Vorrichtungsinformationen der dritten Vorrichtung die zweite eindeutige Kennung der dritten Vorrichtung umfassen.

2. Verfahren nach Anspruch 1, ferner umfassend:
für den Fall, dass die erste Vorrichtungsliste nicht von dem IoT-Server gespeichert wird, Übertragen einer dritten Anforderung zum Einstellen der ersten Vorrichtungsliste an den IoT-Server, wobei die dritte Anforderung den ersten Typ der zweiten Vorrichtung und die ersten Merkmalsinformationen umfasst, die mit der zweiten Vorrichtung verbunden sind.

3. Verfahren nach Anspruch 1,
wobei die Identifizierung der ersten eindeutigen Kennung der zweiten Vorrichtung umfasst:
Bestimmen, ob die erste Merkmalsinformation, die der zweiten Vorrichtung zugeordnet ist, mit einem ersten Element in der ersten Vorrichtungsliste übereinstimmt; und
Bestimmen einer eindeutigen Kennung für das erste Element als die erste eindeutige Kennung der zweiten Vorrichtung für den Fall, dass die erste Merkmalsinformation, die der zweiten Vorrichtung zugeordnet ist, mit dem ersten Element in der ersten Vorrichtungsliste übereinstimmt.

4. Verfahren nach Anspruch 3, ferner umfassend:
für den Fall, dass kein Element in der ersten Vorrichtungsliste mit der ersten Merkmalsinformation der zweiten Vorrichtung übereinstimmt, Benachrichtigen des IoT-Servers, um der zweiten Vorrichtung in der Vorrichtungsliste eine eindeutige Kennung zuzuweisen und die erste Merkmalsinformation in die Vorrichtungsliste hinzuzufügen.

5. Verfahren nach Anspruch 1, ferner umfassend:
Anzeigen des ersten Bildes auf einem Bildschirm der ersten Vorrichtung;
Bestimmen einer Anzahl von IoT-Vorrichtungen in dem ersten Bild; und
Empfangen einer ersten Eingabe zur Auswahl der zweiten Vorrichtung aus der Anzahl der IoT-Vorrichtungen.

6. Verfahren nach Anspruch 1, ferner umfassend:
Empfangen (301) einer zweiten Eingabe zur Erfassung eines Befehlsmenüs für die zweite Vorrichtung;
als Reaktion auf die zweite Eingabe, Übertragen (301) einer vierten Anforderung an die zweite Vorrichtung für das Befehlsmenü;
Empfangen und Anzeigen (302) des Befehlsmenüs in einem schwebenden Fenster; und
für den Fall, dass eine dritte Eingabe eines Befehls im Menü empfangen wird, Übertragen (303) einer fünften Anforderung an die zweite Vorrichtung zur Ausführung des Befehls.

7. Verfahren nach Anspruch 1, ferner umfassend:
Erfassen (901) eines vierten Bildes einer fünften Vorrichtung mit Hilfe der Kamera;
Anzeigen des vierten Bildes, wobei die fünfte Vorrichtung in einem ersten Bereich angezeigt wird;
Erkennen (902) eines vierten Typs der fünften Vorrichtung und einer vierten Merkmalsinformation, die der fünften Vorrichtung basierend auf dem vierten Bild zugeordnet ist;
Empfangen (903) einer vierten Vorrichtungsliste basierend auf dem vierten Typ der fünften Vorrichtung von dem IoT-Server;
Identifizieren einer vierten eindeutigen Kennung der fünften Vorrichtung in der vierten Vorrichtungsliste basierend auf der vierten Merkmalsinformation, die der fünften Vorrichtung zugeordnet ist;
Empfangen (904) von Informationen, die einen IoT-Zustand der fünften Vorrichtung beinhalten, von dem IoT-Server; und
Anzeigen (905) des IoT-Zustands der fünften Vorrichtung durch ein schwebendes Fenster, wobei das schwebende Fenster in einem zweiten Bereich angezeigt wird, der sich vom ersten Bereich unterscheidet,
wobei das Verfahren ferner umfasst, dass für den Fall, dass der IoT-Zustand einem verbundenen Zustand entspricht, Anfordern einer Liste von Vorrichtungen, die mit der fünften Vorrichtung verbunden sind, von dem IoT-Server und Anzeigen eines schwebenden Menüs, das die Liste von Vorrichtungen in einem zweiten Bereich enthält, der sich von dem ersten Bereich unterscheidet.

8. Vorrichtung, umfassend:
mindestens eine Kamera;
eine Touchscreen-Anzeige; und
mindestens einen Prozessor,
wobei der mindestens eine Prozessor konfiguriert ist zum:
Erfassen eines ersten Bildes einer zweiten Vorrichtung mit Hilfe der mindestens einen Kamera,
Erkennen eines ersten Typs der zweiten Vorrichtung und erster, der zweiten Vorrichtung zugeordneter Merkmalsinformationen basierend auf dem ersten Bild,
Übertragen einer ersten Anforderung für eine erste Vorrichtungsliste basierend auf dem ersten Typ der zweiten Vorrichtung an einen Internet der Dinge-, IoT-,Server;
für den Fall, dass die erste Vorrichtungsliste vom IoT-Server gespeichert wird, Empfangen der ersten Vorrichtungsliste vom IoT-Server;
Identifizieren einer ersten eindeutigen Kennung der zweiten Vorrichtung in der ersten Vorrichtungsliste basierend auf der ersten Merkmalsinformation, die der zweiten Vorrichtung zugeordnet ist, und
Übertragen einer zweiten Anforderung zum Herstellen einer Verbindung mit der zweiten Vorrichtung basierend auf der ersten eindeutigen Kennung der zweiten Vorrichtung,
Erfassen (701) eines zweiten Bildes einer dritten Vorrichtung (800) mit Hilfe der Kamera,
Erkennen eines zweiten Typs der dritten Vorrichtung (800) und einer zweiten Merkmalsinformation, die der dritten Vorrichtung (800) zugeordnet ist, basierend auf dem zweiten Bild,
Empfangen einer zweiten Vorrichtungsliste basierend auf dem zweiten Typ der dritten Vorrichtung (800) von dem IoT-Server,
Identifizieren einer zweiten eindeutigen Kennung der dritten Vorrichtung (800) in der zweiten Vorrichtungsliste basierend auf der zweiten Merkmalsinformation, die der dritten Vorrichtung (800) zugeordnet ist, und
Bestimmen (703), ob die dritte Vorrichtung als Vorrichtung zum Initiieren einer Anforderung zum Aufbau einer Verbindung mit der zweiten Vorrichtung dient,
für den Fall, dass bestimmt wird, dass die dritte Vorrichtung als Vorrichtung zum Initiieren der Anforderung zum Herstellen der Verbindung dient, Übertragen (704) von Vorrichtungsinformationen der zweiten Vorrichtung an die dritte Vorrichtung zum Herstellen einer Verbindung mit der zweiten Vorrichtung, wobei die Vorrichtungsinformationen der zweiten Vorrichtung die erste eindeutige Kennung der zweiten Vorrichtung umfassen, und
für den Fall, dass bestimmt wird, dass die dritte Vorrichtung nicht als Vorrichtung zum Initiieren der Anforderung zum Herstellen der Verbindung dient, Übertragen (705) von Vorrichtungsinformationen der dritten Vorrichtung an die zweite Vorrichtung zum Herstellen einer Verbindung mit der dritten Vorrichtung, wobei die zweiten Vorrichtungsinformationen der dritten Vorrichtung die zweite eindeutige Kennung der dritten Vorrichtung umfassen.

9. Vorrichtung nach Anspruch 8,
wobei der mindestens eine Prozessor ferner konfiguriert ist zum:
für den Fall, dass die erste Vorrichtungsliste nicht von dem IoT-Server gespeichert wird, Übertragen einer dritten Anforderung zum Einstellen der ersten Vorrichtungsliste an den IoT-Server, wobei die dritte Anforderung den ersten Typ der zweiten Vorrichtung und die ersten Merkmalsinformationen umfasst, die mit der zweiten Vorrichtung verbunden sind.

10. Vorrichtung nach Anspruch 8,
wobei der mindestens eine Prozessor ferner konfiguriert ist zum:
Bestimmen, ob die erste Merkmalsinformation, die der zweiten Vorrichtung zugeordnet ist, mit einem ersten Element in der ersten Vorrichtungsliste übereinstimmt, und
Bestimmen einer eindeutigen Kennung für das erste Element als die erste eindeutige Kennung der zweiten Vorrichtung für den Fall, dass die erste Merkmalsinformation, die der zweiten Vorrichtung zugeordnet ist, mit dem ersten Element in der ersten Vorrichtungsliste übereinstimmt,
wobei der mindestens eine Prozessor ferner konfiguriert ist, um für den Fall, dass kein Element in der ersten Vorrichtungsliste mit der ersten Merkmalsinformation der zweiten Vorrichtung übereinstimmt, den IoT-Server zu benachrichtigen, um der zweiten Vorrichtung in der Vorrichtungsliste eine eindeutige Kennung zuzuweisen und die erste Merkmalsinformation in die Vorrichtungsliste hinzuzufügen.

11. Vorrichtung nach Anspruch 8, wobei der mindestens eine Prozessor ferner konfiguriert ist zum:
Anzeigen des ersten Bildes auf der Touchscreen-Anzeige,
Bestimmen einer Anzahl von IoT-Vorrichtungen in dem ersten Bild, und
Empfangen einer ersten Eingabe zur Auswahl der zweiten Vorrichtung aus der Anzahl der ersten IoT-Vorrichtungen.

12. Vorrichtung nach Anspruch 8, wobei der mindestens eine Prozessor ferner konfiguriert ist zum:
Empfangen einer zweiten Eingabe zur Erfassung eines Befehlsmenüs für die zweite Vorrichtung,
als Reaktion auf die zweite Eingabe, Übertragen einer vierten Anforderung an die zweite Vorrichtung für das Befehlsmenü,
Empfangen und Anzeigen des Befehlsmenüs in einem schwebenden Fenster, und
für den Fall, dass eine dritte Eingabe eines Befehls im Menü empfangen wird, Übertragen einer fünften Anforderung an die zweite Vorrichtung zur Ausführung des Befehls.

13. Vorrichtung nach Anspruch 8, wobei der mindestens eine Prozessor ferner konfiguriert ist zum:
Erfassen eines vierten zweiten Bildes einer fünften Vorrichtung mit Hilfe der mindestens einen Kamera,
Anzeigen des vierten Bildes, wobei die fünfte Vorrichtung in einem ersten Bereich angezeigt wird,
Erkennen eines vierten Typs der fünften Vorrichtung und einer vierten Merkmalsinformation, die der fünften Vorrichtung basierend auf dem vierten Bild zugeordnet ist,
Empfangen einer vierten Vorrichtungsliste basierend auf dem vierten Typ der fünften Vorrichtung von dem IoT-Server,
Identifizieren einer vierten eindeutigen Kennung der fünften Vorrichtung in der vierten Vorrichtungsliste basierend auf der vierten Merkmalsinformation, die der fünften Vorrichtung zugeordnet ist,
Empfangen von Informationen, die einen IoT-Zustand der fünften Vorrichtung beinhalten, von dem IoT-Server, und
Anzeigen des IoT-Zustands der fünften Vorrichtung durch ein schwebendes Fenster, wobei das schwebende Fenster in einem zweiten Bereich angezeigt wird, der sich vom ersten Bereich unterscheidet,
wobei der mindestens eine Prozessor ferner konfiguriert ist, um für den Fall, dass der IoT-Zustand einem verbundenen Zustand entspricht, eine Liste von Vorrichtungen, die mit der fünften Vorrichtung verbunden sind, von dem IoT-Server anzufordern und ein schwebendes Menü anzuzeigen, das die Liste von Vorrichtungen in einem zweiten Bereich umfasst, der sich von dem ersten Bereich unterscheidet.

## Revendications

1. Procédé pour établir une connexion entre des dispositifs par un premier dispositif (100, 200), le procédé comprenant :
acquérir (101) une première image d'un second dispositif (210) à l'aide d'une caméra du premier dispositif (100, 200) ;
reconnaître (102) un premier type du second dispositif (210) et une première information de caractéristique associée au second dispositif en se basant sur la première image ;
transmettre (103) une première demande de première liste de dispositifs basée sur le premier type du second dispositif (210) à un serveur de l'internet des objets, IoT ;
dans le cas où la première liste de dispositifs est stockée par le serveur IoT, recevoir (103) la première liste de dispositifs du serveur IoT ;
identifier (104) un premier identifiant unique du second dispositif (210) dans la première liste de dispositifs en se basant sur les premières informations de caractéristiques associées au second dispositif (210) ;
transmettre (105) une seconde demande d'établissement d'une connexion avec le second dispositif (210) en se basant sur le premier identifiant unique du second dispositif (210) ;
acquérir (701) une seconde image d'un troisième dispositif (800) à l'aide de la caméra ;
reconnaître un second type de troisième dispositif (800) et une seconde information de caractéristique associée au troisième dispositif (800) en se basant sur la seconde image ;
recevoir une seconde liste de dispositifs basée sur le second type du troisième dispositif (800) à partir du serveur IoT ;
identifier un second identifiant unique du troisième dispositif (800) dans la seconde liste de dispositifs, en se basant sur les secondes informations de caractéristiques associées au troisième dispositif (800) ; et
déterminer (703) si le troisième dispositif sert de dispositif pour initier une demande d'établissement d'une connexion avec le second dispositif,
dans le cas où le troisième dispositif est déterminé à servir de dispositif pour initier la demande d'établissement de la connexion, transmettre (704) des informations de dispositif du second dispositif au troisième dispositif pour établir une connexion avec le second dispositif, les informations de dispositif du second dispositif comprenant le premier identifiant unique du second dispositif, et
dans le cas où le troisième dispositif n'est pas déterminé à servir de dispositif pour initier la demande d'établissement de la connexion, transmettre (705) les informations de dispositif du troisième dispositif au second dispositif pour établir une connexion avec le troisième dispositif, les secondes informations de dispositif du troisième dispositif comprenant le second identifiant unique du troisième dispositif.

2. Procédé de la revendication 1, comprenant en outre :
dans le cas où la première liste de dispositifs n'est pas stockée par le serveur IoT, transmettre une troisième demande de réglage de la première liste de dispositifs au serveur IoT, la troisième demande comprenant le premier type du second dispositif et les premières informations de caractéristiques associées au second dispositif.

3. Procédé de la revendication 1,
dans lequel l'identification du premier identifiant unique du second dispositif comprend :
déterminer si la première information de caractéristique associée au second dispositif correspond à un premier élément de la première liste de dispositifs ; et
déterminer un identifiant unique du premier élément en tant que premier identifiant unique du second dispositif dans le cas où les premières informations de caractéristiques associées au second dispositif sont mises en correspondance avec le premier élément dans la première liste de dispositifs.

4. Procédé de la revendication 3, comprenant en outre :
dans le cas où aucun élément de la première liste de dispositifs ne correspond à la première information de caractéristique du second dispositif, notifier au serveur IoT d'attribuer un identifiant unique au second dispositif dans la liste de dispositifs, et ajouter la première information de caractéristique dans la liste de dispositifs.

5. Procédé de la revendication 1, comprenant en outre :
afficher la première image sur un écran du premier dispositif ;
déterminer un nombre de dispositifs IoT dans la première image ; et
recevoir une première entrée sélectionnant le second dispositif parmi le nombre de dispositifs IoT.

6. Procédé de la revendication 1, comprenant en outre :
recevoir (301) une seconde entrée pour l'acquisition d'un menu de commandes pour le second dispositif ;
en réponse à la deuxième entrée, transmettre (301) une quatrième demande au second dispositif pour le menu de commandes ;
recevoir et afficher (302) le menu de commandes dans une fenêtre flottante ; et
en cas de réception d'une troisième entrée d'une commande du menu, transmettre (303) une cinquième demande au second dispositif d'exécuter la commande.

7. Procédé de la revendication 1, comprenant en outre :
acquérir (901) une quatrième image d'un cinquième dispositif à l'aide de la caméra ;
afficher la quatrième image, le cinquième dispositif étant affiché dans une première région ;
reconnaître (902) un quatrième type du cinquième dispositif et une quatrième information de caractéristique associée au cinquième dispositif en se basant sur la quatrième image ;
recevoir (903) une quatrième liste de dispositifs basée sur le quatrième type du cinquième dispositif en provenance du serveur IoT ;
identifier un quatrième identifiant unique du cinquième dispositif dans la quatrième liste de dispositifs, en se basant sur les quatrièmes informations de caractéristiques associées au cinquième dispositif ;
recevoir (904) des informations comprenant un état IoT du cinquième dispositif en provenance du serveur IoT ; et
afficher (905) l'état IoT du cinquième dispositif par l'intermédiaire d'une fenêtre flottante, la fenêtre flottante étant affichée dans une seconde région différente de la première région,
dans lequel le procédé comprend en outre, dans le cas où l'état IoT correspond à un état connecté, la demande d'une liste de dispositifs connectés au cinquième dispositif à partir du serveur IoT, et l'affichage d'un menu flottant comprenant la liste des dispositifs dans une seconde région qui est différente de la première région.

8. Dispositif, comprenant :
au moins une caméra ;
un affichage d'écran tactile ; et
au moins un processeur,
dans lequel l'au moins un processeur est configuré pour :
acquérir une première image d'un second dispositif en utilisant l'au moins une caméra,
reconnaître un premier type du second dispositif et une première information de caractéristique associée au second dispositif en se basant sur la première image,
transmettre une première demande de première liste de dispositifs basée sur le premier type du second dispositif à un serveur de l'internet des objets, IoT ;
dans le cas où la première liste de dispositifs est stockée par le serveur IoT, recevoir la première liste de dispositifs du serveur IoT ;
identifier un premier identifiant unique du second dispositif dans la première liste de dispositifs en se basant sur les premières informations de caractéristiques associées au second dispositif, et
transmettre une seconde demande d'établissement d'une connexion avec le second dispositif en se basant sur le premier identifiant unique du second dispositif,
acquérir (701) une seconde image d'un troisième dispositif (800) à l'aide de la caméra,
reconnaître un second type de troisième dispositif (800) et une seconde information de caractéristique associée au troisième dispositif (800) en se basant sur la seconde image,
recevoir une seconde liste de dispositifs basée sur le second type du troisième dispositif (800) à partir du serveur IoT,
identifier un second identifiant unique du troisième dispositif (800) dans la seconde liste de dispositifs, en se basant sur les secondes informations de caractéristiques associées au troisième dispositif (800), et
déterminer (703) si le troisième dispositif sert de dispositif pour initier une demande d'établissement d'une connexion avec le second dispositif,
dans le cas où le troisième dispositif est déterminé à servir de dispositif pour initier la demande d'établissement de la connexion, transmettre (704) des informations de dispositif du second dispositif au troisième dispositif pour établir une connexion avec le second dispositif, les informations de dispositif du second dispositif comprenant le premier identifiant unique du second dispositif, et
dans le cas où le troisième dispositif n'est pas déterminé à servir de dispositif pour initier la demande d'établissement de la connexion, transmettre (705) les informations de dispositif du troisième dispositif au second dispositif pour établir une connexion avec le troisième dispositif, les secondes informations de dispositif du troisième dispositif comprenant le second identifiant unique du troisième dispositif.

9. Dispositif de la revendication 8,
dans lequel l'au moins un processeur est en outre configuré pour :
dans le cas où la première liste de dispositifs n'est pas stockée par le serveur IoT, transmettre une troisième demande de réglage de la première liste de dispositifs au serveur IoT, la troisième demande comprenant le premier type du second dispositif et les premières informations de caractéristiques associées au second dispositif.

10. Dispositif de la revendication 8,
dans lequel l'au moins un processeur est en outre configuré pour :
déterminer si la première information de caractéristique associée au second dispositif correspond à un premier élément de la première liste de dispositifs, et
déterminer un identifiant unique du premier élément en tant que premier identifiant unique du second dispositif dans le cas où les premières informations de caractéristiques associées au second dispositif sont mises en correspondance avec le premier élément dans la première liste de dispositifs,
dans lequel l'au moins un processeur est en outre configuré pour, dans le cas où aucun élément de la première liste de dispositifs ne correspond aux premières informations de caractéristique du second dispositif, notifier au serveur IoT d'attribuer un identifiant unique au second dispositif dans la liste de dispositifs, et ajouter la première information de caractéristique dans la liste de dispositifs.

11. Dispositif de la revendication 8, dans lequel l'au moins un processeur est en outre configuré pour :
afficher la première image sur l'affichage d'écran tactile,
déterminer un nombre de dispositifs IoT dans la première image, et
recevoir une première entrée sélectionnant le second dispositif parmi le nombre de premiers dispositifs IoT.

12. Dispositif de la revendication 8, dans lequel l'au moins un processeur est en outre configuré pour :
recevoir une seconde entrée pour l'acquisition d'un menu de commandes pour le second dispositif,
en réponse à la deuxième entrée, transmettre une quatrième demande au second dispositif pour le menu de commandes,
recevoir et afficher le menu de commandes dans une fenêtre flottante, et
en cas de réception d'une troisième entrée d'une commande du menu, transmettre une cinquième demande au second dispositif d'exécuter la commande.

13. Dispositif de la revendication 8, dans lequel l'au moins un processeur est en outre configuré pour :
acquérir une quatrième seconde image d'un cinquième dispositif en utilisant l'au moins une caméra,
afficher la quatrième image, le cinquième dispositif étant affiché dans une première région,
reconnaître un quatrième type du cinquième dispositif et une quatrième information de caractéristique associée au cinquième dispositif en se basant sur la quatrième image,
recevoir une quatrième liste de dispositifs basée sur le quatrième type du cinquième dispositif en provenance du serveur IoT,
identifier un quatrième identifiant unique du cinquième dispositif dans la quatrième liste de dispositifs, en se basant sur les quatrièmes informations de caractéristiques associées au cinquième dispositif,
recevoir des informations comprenant un état IoT du cinquième dispositif en provenance du serveur IoT, et
afficher l'état IoT du cinquième dispositif par l'intermédiaire d'une fenêtre flottante, la fenêtre flottante étant affichée dans une seconde région différente de la première région,
dans lequel l'au moins un processeur est en outre configuré pour, dans le cas où l'état IoT correspond à un état connecté, demander une liste de dispositifs connectés au cinquième dispositif au serveur IoT, et afficher un menu flottant comprenant la liste des dispositifs dans une seconde région qui est différente de la première région.
